# EUROPEAN PATENT SPECIFICATION

(11) **EP 2 039 572 B1**
(45) Date of publication and mention of the grant of the patent: **07.09.2011**
(21) Application number: 08161397.8
(22) Date of filing: 30.07.2008
(51) Int. Cl.: B60T 7/06, G05G 1/46

(54) **Release mechanism for a parking brake clutch**
Freigabemechanismus für eine Feststellbremsenkupplung
Mécanisme de relâchement pour un embrayage de frein à main

(30) Priority: 31.07.2007 US 831123
(43) Date of publication of application: 25.03.2009
(73) Proprietor: Dura Global Technologies, Inc., Rochester Hills, Michigan 48309 (US)
(72) Inventor: Hanna, Ronald J., East Jordan, Michigan 49727 (US); Remesz, Adam W., Clinton Township, MI 48038 (US)
(74) Representative: Gervasi, Gemma

(56) References cited:
- WO-A-01/96161
- US-A- 5 448 928
- US-A- 5 832 784
- US-A1- 2006 070 485

## Description

### FIELD OF THE INVENTION

The invention relates to parking brake assemblies for motor vehicles. More particularly, the invention relates to a lock-release mechanism for selectively releasing a clutch of a parking brake mechanism.

### BACKGROUND OF THE INVENTION

Generally, parking brake assemblies for automobiles, among other things, include a lock-release mechanism made up of a sector gear and lock pawl which cooperate to provide a ratcheting type directional locking of the parking brake and an actuator to disengage the lock pawl from the gear sector to release the parking brake or a helical spring. Examples of parking brakes can be found in U.S. Patent Numbers 4,850,242; 5,309,786; 5,881,605; 5,001,942; 5,448,928; 5,211,072; 5,875,688; 5,182,963; 5,588,335; 5,832,784; 5,533,420; 6,662,676, the disclosures of which are herein incorporated by reference.

US 5,832,784 discloses a parking brake control for operating a parking brake cable between a release position and a brake engagement position comprises a mounting plate assembly, an input lever assembly which translates and rotates with respect to the mounting plate assembly, and a sector which is slidably attached to the mounting plate assembly and rotatable in response to movement of the input lever assembly, wherein rotation of the sector towards the brake engagement position produces a tension force on a cable. The parking brake control can further comprise a first rivet extending into a slot in the input lever assembly; preferably the sector rotates around the first rivet. In addition, a second rivet may be attached to the input lever assembly and received by both a cam slot in the mounting plate assembly and a slot in the sector. The parking brake control produces an output tension force on the cable, pulling the cable away from the parking brake to actuate the parking brake.

One of the issues with conventional parking brake systems is that they do not package equally across multiple car platforms. There is, therefore, a need in the art for a parking brake assembly that has improved packaging with sufficient performance such that the system can be more readily adapted across multiple vehicle platforms.

Another issue with conventional brakes is brake lever travel loss. Brake lever travel loss is a term generally understood in the art. Essentially, brake lever travel loss results in the necessity of over applying a parking brake. As such there is a need in the art for a parking brake assembly that has reduced brake lever travel loss.

### SUMMARY OF THE INVENTION

The invention is described in claim 1.

### BRIEF DESCRIPTION OF THE DRAWINGS

Figure 1 is a side view of a parking brake assembly according to one embodiment of the invention, shown in a released position;

Figure 2 is a side view of the parking brake assembly, shown in an actuated position;

Figure 3 is an exploded perspective view of the parking brake assembly;

Figure 4 is a side view of the clutch and lock-release mechanism, shown in a locked position

Figure 5 is a side view of the clutch and lock-release mechanism, shown in an unlocked position; and

Figure 6 is an enlarged partial view of the clutch and lock-release mechanism, shown in the locked position and illustrating the forces involved in actuating the clutch and lock-release mechanism between the locked and unlocked positions.

### DETAILED DESCRIPTION OF PREFERRED EMBODIMENTS

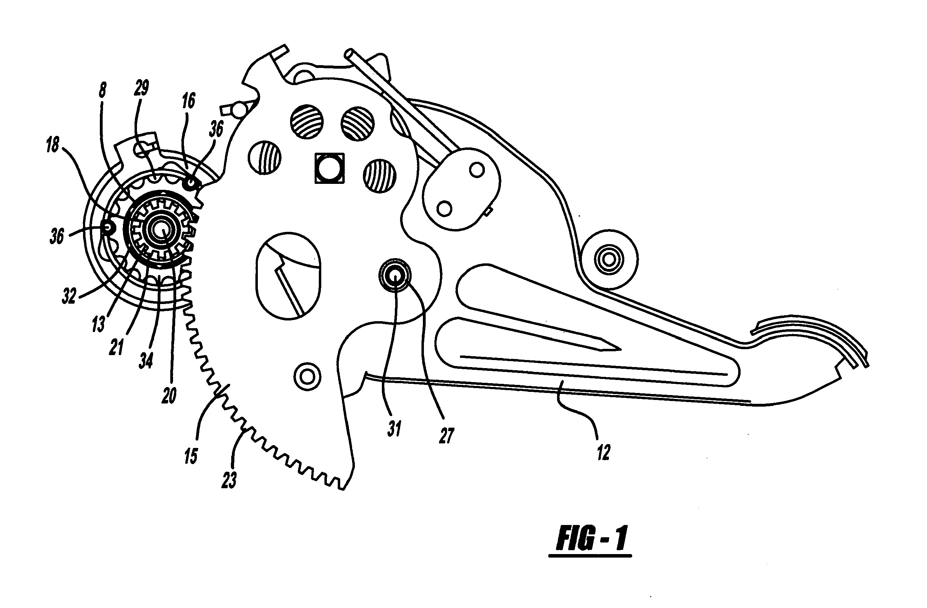

Referring to Figures 1-3, a parking brake assembly is generally indicated at 10. The parking brake assembly 10 includes a lever 12, a rotary clutch 8 coupled with the lever 12 and a lock-release mechanism 16 coupled with the clutch 8. Described in greater detail below, the parking brake assembly 10 includes a gear mechanism having a pinion 13 and a sector 15 operative between the clutch 8 and the lever 12 to allow the lever 12 to be moved from a released position to an actuated position, locked in the actuated position, and selectively unlocked from the actuated position and returned to the released position.

The parking brake assembly 10 may be any suitable brake actuation device, such as a pedal type, hand type, electronic type, push to release, pull to release, self adjust or cable type parking brake actuator. Illustratively, the parking brake assembly 10 is shown as a pedal type brake actuation device utilizing a foot-actuated lever 12. If the parking brake assembly 10 is used for a cable-driven parking brake system, then the lever 12 may be coupled to a cable via a cable connector or, as shown, the cable may be connected to the lever 12 by a cable tensioning mechanism 17. The lever 12 may be movably or pivotally supported in the system in any suitable manner. In the illustrated embodiment, the lever 12 is fixedly secured to a sleeve 27 that is, in turn, pivotally coupled to a pivot shaft 31 having ends fixedly connected to supports 22, 24. By this arrangement, the lever 12 moves together with the sleeve 27 about the pivot shaft 31.

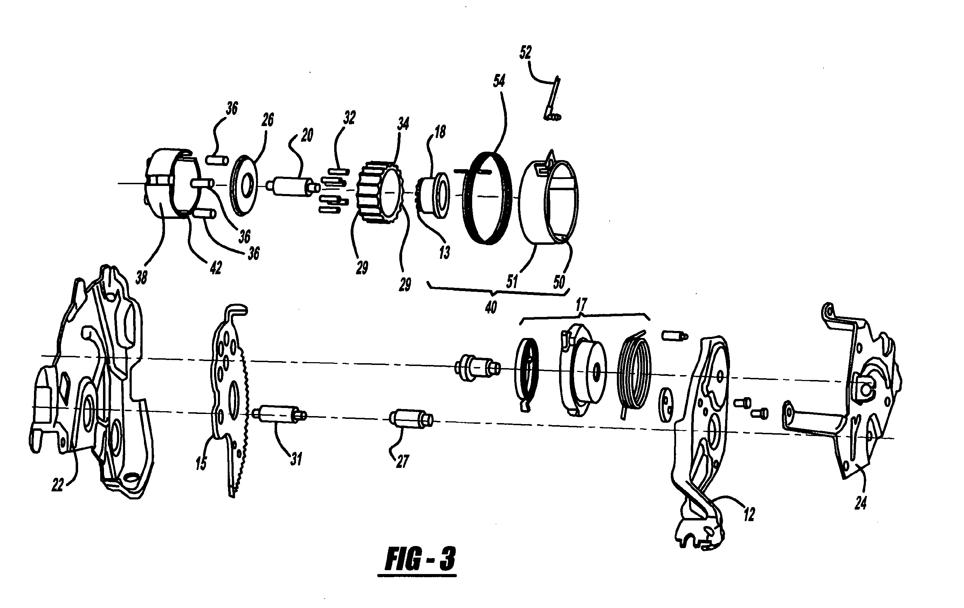

In the illustrated embodiments, the clutch 8 is provided as a roller clutch. An advantage of a roller clutch 8 is that the roller clutch 8 can allow precise, smooth or non-ratcheting movement of a controlled member in a first direction, while preventing rotary movement of the controlled member in an opposite second direction. The roller clutch 8 includes a roller support 34 with one or more roller members 32. The roller members 32 may be positioned between any suitable surface of the roller support 34 and a bearing surface of an adjacent member to be controlled, such as a pivot sleeve 18 shown in Figures 3-5. The pivot sleeve 18 is pivotally coupled to a second pivot shaft 20 with ends fixedly secured to the supports 22, 24. In the illustrated embodiment, the roller members 32 are disposed between the outer cylindrical surface 19 of the pivot sleeve 18 and an inside circumferential surface 33 of the roller support 34. In one embodiment, the roller members 32 may be engagable with notches (not shown) formed along the inside circumferential surface 33 of the roller support 34. The notches allow the roller members 32 to rotate in the first direction to allow rotation of the pivot sleeve 18 relative to the roller support 34 and wedge or lock to prevent rotation of the pivot sleeve 18 relative to the roller support 34 in the second direction. In this case, springs (not shown) may be used to bias the roller members 32 out of the wedged or locked state.

The pinion 13 is coupled to the pivot sleeve 18 for movement generally therewith. Illustratively, the pinion 13 is fixedly secured to or alternatively integral with the pivot sleeve 18 for movement therewith about the second pivot shaft 20. The pinion 13 has teeth 21 that are mechanically engaged with teeth 23 on the sector 15, so that the rotation of the lever 12 about the pivot shaft 31 is controlled by the clutch 8 and lock-release mechanism 16. Mechanically engaged means that the teeth 21, 23 of the pinion 13 and sector 15 may be directly engaged or, alternatively, one or more gears may be provided between the pinion 13 and the sector 15 to achieve, for example, increased or reduced pedal effort and/or for packaging purposes. The clutch 8 allows for rotation of the pivot sleeve 18 and, in turn, the pinion 13 in a first direction (such as when the lever 12 and sector 15 are moved by a user to engage the parking brake assembly 10) and prevents return movement of the pivot sleeve 18, pinion 13 and lever 12 in an opposite second direction.

To permit movement of the pivot sleeve 18, pinion 13 and lever 12 in the second direction, the clutch 8 may be used in combination with a lock-release mechanism 16. As such, a rotary clutch 8 in combination with a lock-release mechanism 16 allows unidirectional movement of the pivot sleeve 18 (or some other controlled member) when the lock-release mechanism 16 is engaged, and rotation of the clutch 8 (i.e. parts of the clutch, such as the clutch support 34 or the entire clutch) in an opposite direction when the lock-release mechanism 16 is disengaged. A preferred rotary clutch 8 and lock-release mechanism 16 permits primary cable travel loss of 1 mm or less. In one aspect the primary cable travel loss may be less than 0.5 mm and in another aspect less than 0.15 mm.

In general, the lock-release mechanism 16 may be any suitable engagement /disengagement member or device for locking and releasing a controlled member. The lock-release mechanism 16 may be manually or power actuated. It should be appreciated that a controlled member can be any of, one or more, temporarily constrained element(s), such as a pinion, housing , support, pivot, link, shaft, adapter, adapter for attachment to a roller clutch, a roller support, etc. In the present embodiment, the controlled member is the clutch 8.

The lock-release mechanism 16 includes a block 36 engagable with any one of a plurality of notches 29 on the outer circumference 35 of the roller support 34. In Figure 3, the blocks 36 are provided as cylindrically shaped pins, though any suitable shape for the block 36 may be used which allows movement of the block 36 between locked and unlocked position, as described further below.

The lock-release mechanism 16 also includes a guide member 38 for locating and movably supporting the block 36. The guide member 38 may be any suitable position fixing device, such as a bearing, block, strap, flange, housing, etc. The guide member 38 in the illustrated embodiment is a bell housing with a flange adapted for attaching the guide member 38 to a suitable support in the vehicle, such as the pedal box or brackets. The guide member 38 may be attached to a suitable support by any suitable means, including welding, rivets, bots, screws, adhesives, etc. The guide member 38 preferably has a bearing surface 39. In the illustrated embodiment, the bearing surface 39 is generally cylindrical. The guide member 38 preferably includes a check 42 for allowing location of the block 36. The check 42 in this example is in the form of a pass-through slot in the guide member 38. While three slots 42 are shown in the pictured embodiment of Figure 3, it should be realized that any number of slots 42 may be utilized, depending generally on the requirements of a specific application. The slots 42, are illustratively equally spaced circumferentially about the circumference of the guide member 38.

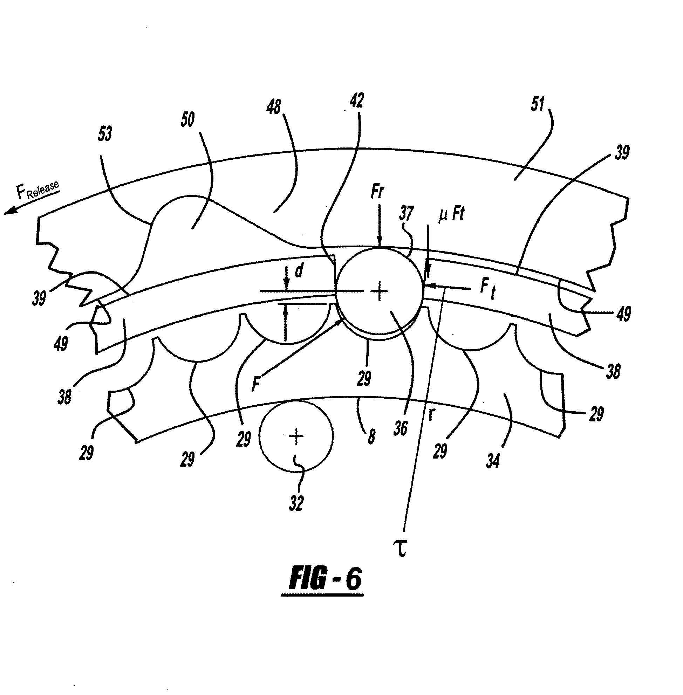

The lock-release mechanism 16 also includes an actuator 40. The actuator 40 may be any suitable actuating member or device for engaging and disengaging the lock-release mechanism 16 and may be manually actuated or powered. In generally, the actuator 40 engages the block 36 with a force vector or force that is non-normal to a torque load applied to some controlled member (e.g. the clutch 8). By applying the force to the block 36 at an angle that is non-normal to the torque load applied to the controlled member, the force required by the actuator 40 to engage the block 36 can be reduced. Referring to Figure 6, the force F_{Release} needed to initiate the actuator may be generally seen as a component of the radial force Fr multiplied by the coefficient of friction µ. The force Fr is a function of the force F of the block 36 in relation to the controlled member 8 and the distance d from the center of the block 36 to the controlled member 8. The force Fr needed to keep the block 36 in place will be a function of the torque (τ) applied to the controlled member 36, Ft. The force Fr may be reduced as the angle between Ft and F is reduced. The angle may be reduced in any suitable manner. The angle is preferably reduced by using one or more curved bearing surfaces. As such, the block 36 may include a curved bearing surface 37 or the actuator 40 may have a curved or angled bearing surface 53 or both. The one or more bearing surface(s) 37, 53 are preferably curved or angled such that when a torque (τ) is applied to some controlled member 8 (either directly or through a pivot) the force transferred by the controlled member 8 acts on the actuator 40 through the block 36. By having an angle of contact between the actuator 40 and that of a block 36 that is non-normal to the torque load applied to the controlled member 8, the force needed to actuate the lock-release mechanism 16 can be reduced.

The actuator 40 preferably has an adjuster 48 for moving the block 36 in and out of engagement with the notches 29 in the roller support 34. The adjuster 48 may be in any suitable form, such as a cam, detent, surface relief, hole, mound, etc. In the illustrated embodiment, the adjuster 48 is an annular member or ring 51 having a bearing surface 49 for contacting the block 36 and retaining the block 36 engaged with one of the notches 29 to lock the roller support 34 relative to the ring 51. A recess or relief 50 is formed along the bearing surface 49 and is sized to receive at least a portion of the block 36 therein. The relief 50 includes an arched bearing surface 53 spaced radially relative to the bearing surface 49.

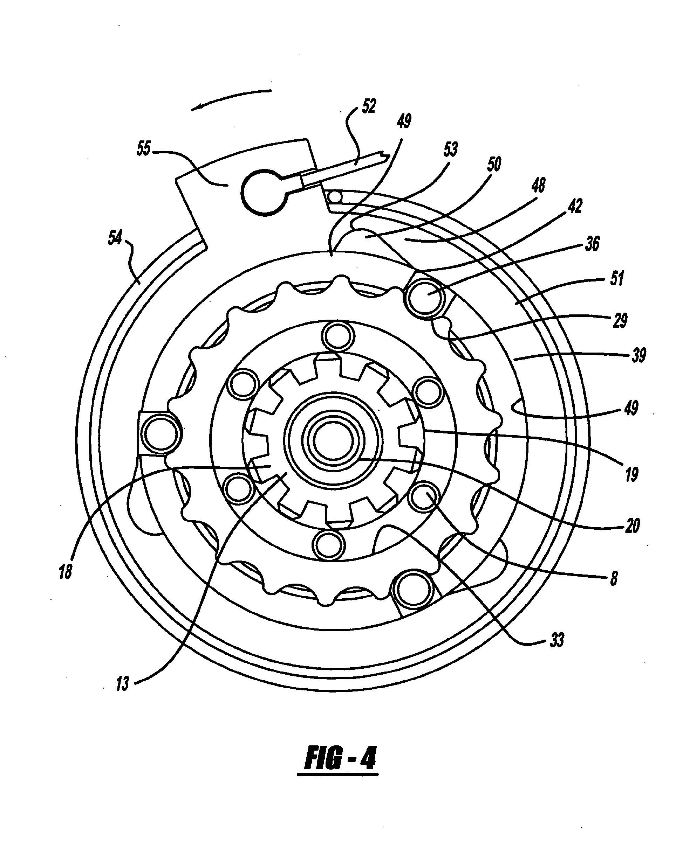

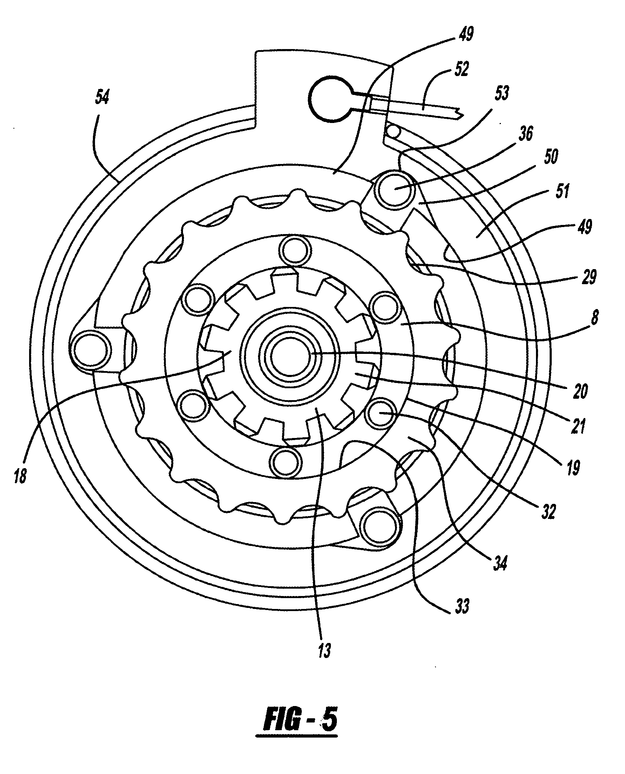

The ring 51 allows selective engagement and retention of the block 36 with the notches 29 in the roller support 34 by rotation of the ring 51 in one direction toward a locked position, as shown in Figure 4, and disengagement of the block 36 from the notches 29 by rotation of the ring 51 in an opposite direction toward an unlocked position, as shown in Figure 5. More specifically, in the locked position, the block 36 is disposed in the slot 42 and partially extends beyond the guide member 38 into a corresponding notch 29 of roller support 34, thereby preventing rotation of the roller support 34 relative to the guide member 38. Any forces tending to displace the block 36 from the corresponding notch 29 are resisted by immediate contact of the block 36 with the bearing surface 49. The engaging force delivered by the actuator 40 to the block 36 is preferably delivered at a vector non-normal to the torque load applied to the roller support 34. In the case of a parking brake assembly with a roller clutch 8 coaxially connected to the pivot sleeve 18, a vector non-normal to the torque load applied to the roller support 34 is a force load applied by the pivot sleeve 18.

To release the controlled member 60, the ring 51 is rotated to the unlocked position, wherein the relief 50 in the bearing surface 49 is substantially rotatably aligned with the slot 42 and the block 36 disposed in the slot 42. The block 36 is then radially displaceable from the notch 29 into the relief 50. Rotation of the roller support 34 causes displacement of the block 36 out of the notch 29 and into the relief 50 in the ring 51. The roller support 34 becomes freely rotatable relative to the guide member 38 once the block 36 is fully displaced from the notch 29.

In Figures 3-5, the actuating mechanism is shown illustratively to include a cable 52 adapted to be coupled to a receiver 55 on the adjuster ring 51. The cable 52 can be pulled to move the ring 51 to the unlocked position. The cable 52 may be pulled manually or by powered actuators, such as solenoids, linear actuators, rods, cables, springs, magnets, etc. Alternatively, a powered actuator may be directly coupled to the adjuster 48 for locking and unlocking the lock-release mechanism 16.

The lock-release mechanism 16 may also include a biasing member 54 to bias the actuator 40 in one or more directions, such as toward the locked position. As illustrated, the biasing member 54 biases the ring 51 of the actuator 40 toward the locked position (indicated by the arrow in Figures 4 and 5). Thus, the ring 51 may be actuated toward the unlocked position by overcoming the biasing force applied by the biasing member 54.

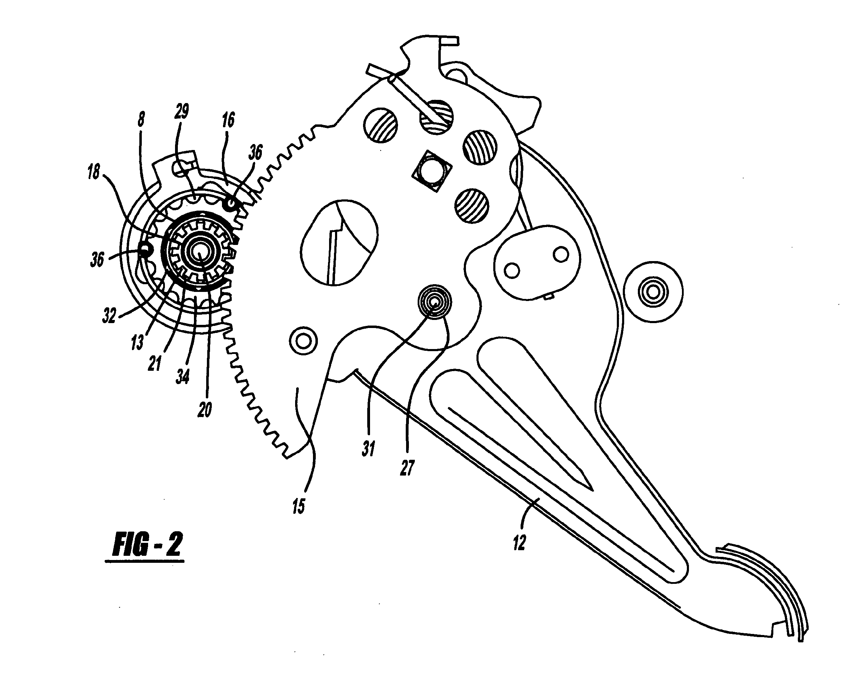

In use, particularly when the lock-release mechanism 16 is used with a roller clutch 8 in a parking brake 10, a user may actuate the parking brake 10 by moving the lever 12 from a released position, shown in Figure 1, toward any one of a plurality of actuated positions, shown illustratively in Figure 2. As the parking brake 10 is actuated, the sector 15 rotates with the lever 12 about the pivot shaft 31. Rotation of the sector 15 causes corresponding rotation of the pivot sleeve 18 due to the meshing of the gear teeth 21, 23 of the pinion 13 and sector 15. The rollers 32 of the roller clutch 8 allow rotation of the pivot sleeve 18 in one direction relative to the locked and fixed roller support 34, but prevent back motion of the pivot sleeve 18 in the opposite direction.

To release the lever 12, the user can pull the cable 52 to move the ring 51 from the locked position, as shown in Figure 4, toward the unlocked position, as shown in Figure 5. In the unlocked position, the relief 50 is generally aligned with an associated block 36 to allow the block 36 to move out of fixing engagement with one of the notches 29 in the roller support 34, thereby allowing the roller clutch 8 and pivot sleeve 18 to rotate together and return the lever 12 to the released and resting position shown by the solid lines in Figure 1. The lever 12 may be returned to the released and resting position by a conventional lever biasing member (not shown).

## Claims

1. A parking brake assembly (10) for a motor vehicle, said parking brake assembly comprising:
a brake lever (12);
a roller clutch (8) operatively connected to the brake lever (12) by a gear mechanism and
allowing unidirectional movement of the brake lever (12), and preventing pivotal movement of the brake lever in a direction opposite the unidirectional movement, the roller clutch (8) being supported by a roller support (34) that is movable together with the roller clutch (8) in a direction opposite the unidirectional movement; and
a lock-release mechanism (16) movable between a locked position to prevent movement of the roller support (34) in the direction opposite the unidirectional movement and an unlocked position to allow movement of the roller support (34) in the direction of the unidirectional movement.

2. The parking brake assembly (10) of claim 1, wherein the unidirectional movement is in a first direction, direction opposite to the unidirectional movement is in a second direction, and the roller clutch (8) allows pivotal movement of the brake lever (12) in a first direction and prevents pivotal movement of the brake lever (12) in an opposite second direction, the roller support (34) is movable together with the roller clutch (8) in the second direction, and the lock-release mechanism is movable between a locked position to prevent movement of the roller support (34) in the second direction and an unlocked position to allow movement of the roller support (34) in the second direction.

3. The parking brake assembly (10) of claim 1, wherein the lock-release mechanism (16) releasably fixes movement of the roller support (34) using a force that is non-normal to a torque load applied to the roller clutch (8).

4. The parking brake assembly (10) of claim 3, wherein the roller clutch (8) includes a generally cylindrical sleeve (18) and at least one unidirectional roller disposed between the sleeve (18) and a bearing surface (49) of the roller support (34); preferably the gear mechanism includes a pinion (13) coupled to one of the sleeve (18) and the brake lever (12); more preferably the gear mechanism includes a sector (15) coupled to the other of the one of the sleeve (18) and the brake lever (12).

5. The parking brake assembly (10) of claim 3, wherein the lock-release mechanism (16) includes one or more notches (29) formed in the roller support (34) for receiving a movable block (36); preferably the lock-release mechanism includes a ring (51) having a bearing surface (49) for maintaining the block (36) in the notch (29) and a recess (50) formed in the bearing surface (49) for receiving at least a portion of the block (36) while disengaged from the notch (29); more preferably the ring (51) is selectively movable between a locked position, in which the bearing surface (49) retains the block in the notch of the roller support (34), and an unlocked position, in which the recess (50) is generally aligned with the notch (29) to allow movement of the block between the notch (29) and the recess (50).

6. The parking brake assembly (10) of claim 1 further comprising a controlled member pivotally coupled to the fixed support for movement about a second pivot spaced apart from the first pivot, wherein
the brake lever (12) is pivotally coupled to a fixed support for rotation about a first pivot;
the roller clutch (8) has at least one unidirectional roller disposed between the roller support (34) and the controlled member allowing unidirectional movement of the controlled member relative to the roller support (34),
the lock-release mechanism (16) has a block (36) selectively movable between a locked position operatively engaging the fixed and roller supports to prevent rotation of the roller support relative to the fixed support and an unlocked position disengaged from the roller support to allow rotation of the roller support (34) and controlled member together in the direction opposite the unidirectional movement; and
the gear mechanism is operative between the controlled member and the brake lever (12), the gear mechanism has a pinion (13) coupled to one of the controlled member and the brake lever (12) and a sector (15) coupled to the other of the one of the controlled member and the brake lever, the pinion (13) and the sector (15) being mechanically engaged for transferring movement between the controlled member and the brake lever (12).

7. The parking brake assembly (10) of claim 6, wherein the block (36) includes a circumferential bearing surface (39).

8. The parking brake assembly (10) as set forth in claim 7, wherein the roller support (34) includes a notch (29) that receives at least a portion of the block (36) therein and engages the circumferential bearing surface (39) to lock the roller support (34) with respect to the fixed support.

9. The parking brake assembly (10) as set forth in claim 8 including an adjuster (48) movably coupled to the fixed support and actuating the block (36) between engagement and disengagement with the notch (29) in response to the movement of the adjuster (48) relative to the fixed support.

10. The parking brake assembly (10) as set forth in claim 9, wherein the adjuster (48) includes a bearing surface (49) that contacts the circumferential bearing surface (39) and maintains the block (36) in the notch (29) of the roller support (34).

11. The parking brake assembly (10) as set forth in claim 10, wherein the bearing surface (49) of the adjuster (48) contacts the circumferential bearing surface (39) of the block (36) with a force that is non-normal to a torque load applied to the pivot sleeve (18).

12. The parking brake assembly (10) as set forth in claim 10, wherein the adjuster (48) includes a recess (50) formed along the bearing surface (49) of the adjuster (48), the recess (50) receiving at least a portion of the block (36) therein while the block is disengaged from the notches (29) in the roller support (34).

13. The parking brake assembly (10) as set forth in claim 12, wherein:
• a guide member (38) fixed in relation to the fixed support is included, the guide member (38) having a slot (42) allowing movement of the block (36) therethrough between the notch (29) in the roller support (34) and the recess (50).
• the guide member (38) is disposed between the roller support (34) and the actuator (40) and the slot (42) in the guide member (38) allows generally radial movement of the block (36) between the notch (29) and the recess (50).

14. The parking brake assembly (10) as set forth in claim 12, wherein the adjuster (48) is a ring (51) rotatably coupled to the fixed support for movement between a locked position, wherein the recess (50) is rotatably spaced apart from the block (36) and the bearing surface (49) is engaged with the circumferential bearing surface (39) to retain the block (36) in the notch (29) of the roller support (34), and an unlocked position, wherein the recess (50) is generally rotatably aligned with the notch (29) to allow movement of the block (36) between the notch (29) and the recess (50); preferably the parking brake assembly includes:
• a biasing member (54) for biasing the ring (1) toward the locked position; or
• a powered actuator for actuating the adjuster (48) between the locked and unlocked positions.

15. The parking brake assembly (10) as set forth in claim 7, wherein the block (36) is selected from the group consisting of: a cylindrically shaped pin, and a ball.

## Patentansprüche

1. Feststellbremsanordnung (10) für ein Motorfahrzeug, wobei die genannte Feststellbremsanordnung umfasst:
- einen Bremshebel (12);
- eine Rollensperrkupplung (8), welche mit dem Bremshebel (12) über einen Zahnradmechanismus funktionell verbunden ist und eine einseitig gerichtete Bewegung des Bremshebels (12) ermöglicht und die um einen Drehpunkt erfolgende Bewegung des Bremshebels in einer solchen Richtung, welche der einseitig gerichteten Bewegung entgegen gerichtet ist, verhindert, wobei diese Rollensperrkupplung (8) von einer Rollenhalterung (34) gehalten wird, welche zusammen mit der Rollensperrkupplung (8) in einer solchen Richtung beweglich ist, welche der einseitig gerichteten Bewegung entgegen gerichtet ist; und
- einen Freigabemechanismus (16), welcher beweglich ist zwischen einer verriegelten Stellung, die dazu dient, die Bewegung der Rollenhalterung (34) in der Richtung entgegen der einseitig gerichteten Bewegung zu verhindern, und einer entriegelten Stellung, die dazu dient, die Bewegung der Rollenhalterung (34) in Richtung der einseitig gerichteten Bewegung zu ermöglichen.

2. Feststellbremsanordnung (10) nach Anspruch 1, bei welcher die einseitig gerichtete Bewegung in einer ersten Richtung erfolgt, die Richtung entgegen der einseitig gerichteten Bewegung eine zweite Richtung ist und die Rollensperrkupplung (8) die um einen Drehpunkt erfolgende Bewegung des Bremshebels (12) in der ersten Richtung ermöglicht und die um einen Drehpunkt erfolgende Bewegung des Bremshebels (12) in der entgegengesetzt gerichteten zweiten Richtung verhindert, die Rollenhalterung (34) zusammen mit der Rollensperrkupplung (8) in der zweiten Richtung beweglich ist und der Freigabemechanismus beweglich ist zwischen einer verriegelten Stellung, die dazu dient, die Bewegung der Rollenhalterung (34) in der zweiten Richtung zu verhindern, und einer entriegelten Stellung, die dazu dient, die Bewegung der Rollenhalterung (34) in der zweiten Richtung zu ermöglichen.

3. Feststellbremsanordnung (10) nach Anspruch 1, bei welcher der Freigabemechanismus (16) die Bewegung der Rollenhalterung (34) auf lösbare Weise **dadurch** fixiert, dass eine Kraft angreift, welche nicht normal zu dem Drehmoment gerichtet ist, das auf die Rollensperrkupplung (8) wirkt.

4. Feststellbremsanordnung (10) nach Anspruch 3, bei welcher die Rollensperrkupplung (8) eine im Allgemeinen zylindrische Buchse (18) und mindestens eine einseitig gerichtete Rolle enthält, welche zwischen dieser Buchse (18) und einer tragenden Fläche (49) der Rollenhalterung (34) angeordnet ist; wobei vorzugsweise der Zahnradmechanismus ein Ritzel (13) enthält, welches mit einem der beiden Teile Buchse (18) und Bremshebel (12) gekoppelt ist, wobei stärker vorzuziehen ist, dass der Zahnradmechanismus einen Sektor (15) aufweist, welcher mit einem der beiden Teile Buchse (18) und Bremshebel (12) gekoppelt ist.

5. Feststellbremsanordnung (10) nach Anspruch 3, bei welcher der Freigabemechanismus (16) eine oder mehrere Kerben (29) enthält, die in der Rollenhalterung (34) ausgebildet sind, um eine bewegliche Sperre (36) aufzunehmen; vorzugsweise enthält der Freigabemechanismus einen Ring (51), welcher eine tragende Fläche (49) aufweist, um die Sperre (36) in der Kerbe (29) zu halten, sowie eine Vertiefung (50), die in der tragenden Fläche (49) ausgebildet ist, um mindestens einen Teil der Sperre (36) aufzunehmen, während diese aus der Kerbe (29) ausgekuppelt ist, wobei stärker vorzuziehen ist, dass der Ring (51) auf wählbare Weise beweglich ist zwischen einer verriegelten Stellung, in welcher die tragende Fläche (49) die Sperre in der Kerbe der Rollenhalterung (34) hält, und einer entriegelten Stellung, in welcher die Vertiefung (50) im Allgemeinen mit der Kerbe (29) ausgerichtet ist, um die Bewegung der Sperre zwischen der Kerbe (29) und der Vertiefung (50) zu ermöglichen.

6. Feststellbremsanordnung (10) nach Anspruch 1, welche außerdem ein gesteuertes Element umfasst, welches an die feststehende Halterung um eine Drehachse drehbar angekoppelt ist zum Zweck der Bewegung um eine zweite Drehachse, die sich in einem gewissen Abstand von der ersten Drehachse befindet, wobei
- der Bremshebel (12) an eine feststehende Halterung zwecks Drehung um eine erste Drehachse drehgelenkig gekoppelt ist;
- die Rollensperrkupplung (8) mindestens eine einseitig gerichtete Rolle aufweist, welche zwischen der Rollenhalterung (34) und dem gesteuerten Element angeordnet ist und die einseitig gerichtete Bewegung des gesteuerten Elements in Bezug auf die Rollenhalterung (34) ermöglicht;
- der Freigabemechanismus (16) eine Sperre (36) aufweist, die wahlweise beweglich ist zwischen einer verriegelten Stellung, welche die feststehende Halterung und die Rollenhalterung funktionell koppelt, um die Drehung der Rollenhalterung gegenüber der feststehenden Halterung zu verhindern, und einer entriegelten Stellung, wo die Auskupplung aus der Rollenhalterung vorliegt, um die Drehung der Rollenhalterung (34) und des gesteuerten Elements gemeinsam in der Richtung zu ermöglichen, die der einseitig gerichteten Bewegung entgegengesetzt gerichtet ist; und
- der Zahnradmechanismus zwischen dem gesteuerten Element und dem Bremshebel (12) wirksam ist, der Zahnradmechanismus ein Ritzel (13) aufweist, welches an eines der beiden Teile gesteuertes Element und Bremshebel (12) angekoppelt ist, sowie einen Sektor (15), welcher an das andere der beiden Teile gesteuertes Element und Bremshebel angekoppelt ist, wobei das Ritzel (13) und der Sektor (15) mechanisch gekoppelt sind, um die Bewegung zwischen dem gesteuerten Element und dem Bremshebel (12) zu übertragen.

7. Feststellbremsanordnung (10) nach Anspruch 6, bei welcher die Sperre (36) eine umfängliche tragende Fläche (39) aufweist.

8. Feststellbremsanordnung (10) wie im Anspruch 7 dargelegt, bei welcher die Rollenhalterung (34) eine Kerbe (29) enthält, welche mindestens einen Teil der Sperre (36) aufnimmt und an die umfängliche tragende Fläche (39) ankoppelt, um die Rollenhalterung (34) in Bezug auf die feststehende Halterung zu arretieren.

9. Feststellbremsanordnung (10) wie im Anspruch 8 dargelegt, welche einen Einsteller (48) enthält, der auf bewegliche Weise an die feststehende Halterung angekoppelt ist und die Sperre (36) zwischen dem Einkuppeln in die Kerbe und dem Auskuppeln aus der Kerbe (29) in Abhängigkeit von der Bewegung des Einstellers (48) relativ zur feststehenden Halterung betätigt.

10. Feststellbremsanordnung (10) wie im Anspruch 9 dargelegt, bei welcher der Einsteller (48) eine tragende Fläche (49) aufweist, welche sich mit der umfänglichen tragenden Fläche (39) in Kontakt befindet und die Sperre (36) in der Kerbe (29) der Rollenhalterung (34) hält.

11. Feststellbremsanordnung (10) wie im Anspruch 10 dargelegt, bei welcher die tragende Fläche (49) des Einstellers (38) sich mit der umfänglichen tragenden Fläche (39) der Sperre (36) mit einer Kraft in Kontakt befindet, die nicht normal zu dem Drehmoment gerichtet ist, das auf die Drehgelenkbuchse (18) wirkt.

12. Feststellbremsanordnung (10) wie im Anspruch 10 dargelegt, bei welcher der Einsteller (48) eine Vertiefung (50) aufweist, welche längs der tragenden Fläche (49) des Einstellers (48) ausgebildet ist, wobei diese Vertiefung (50) mindestens einen Teil der Sperre (36) aufnimmt, während die Sperre aus den Kerben (29) in der Rollenhalterung (34) ausgekuppelt ist.

13. Feststellbremsanordnung (10) wie im Anspruch 12 dargelegt, in welcher
• ein Führungselement (38) vorhanden ist, welches in Bezug auf die feststehende Halterung feststehend ist, wobei dieses Führungselement (38) einen Schlitz (42) aufweist, welcher die Bewegung der Sperre (36) zwischen der Kerbe (29) in der Rollenhalterung (34) und der Vertiefung (50) hindurch ermöglicht;
• dieses Führungselement (38) zwischen der Rollenhalterung (34) und dem Stellglied (40) angeordnet ist und der Schlitz (42) in dem Führungselement (38) die generell die radiale Bewegung der Sperre (36) zwischen der Kerbe (29) und der Vertiefung (50) ermöglicht.

14. Feststellbremsanordnung (10) wie im Anspruch 12 dargelegt, bei welcher der Einsteller (48) ein Ring (51) ist, welcher an die feststehende Halterung drehbar angekoppelt ist zwecks Bewegung zwischen einer verriegelten Stellung, bei welcher die Vertiefung (50) sich drehbar in einem gewissen Abstand von der Sperre (36) befindet und die tragende Fläche (49) mit der umfänglichen tragenden Fläche (39) gekoppelt ist, um die Sperre (36) in der Kerbe (29) der Rollenhalterung (34) zu halten, und einer entriegelten Stellung, in welcher die Vertiefung generell drehbar mit der Kerbe (29) ausgerichtet ist, um die Bewegung der Sperre (36) zwischen der Kerbe (29) und der Vertiefung (50) zu ermöglichen, wobei die Feststellbremsanordnung vorzugsweise enthält:
• ein Vorspannelement (54), um dem Ring (51) in Richtung auf die verriegelte Stellung eine Vorspannung zu geben; oder
• ein Kraftstellglied zur Betätigung des Einstellers (48) zwischen der verriegelten und der entriegelten Stellung.

15. Feststellbremsanordnung (10) wie im Anspruch 7 dargelegt, bei welcher die Sperre ausgewählt wird aus der Gruppe, welche aus einem zylindrisch geformten Stift und einer Kugel besteht.

## Revendications

1. Ensemble frein de stationnement (10) pour un véhicule motorisé, ledit ensemble frein de stationnement comprenant :
un levier de frein (12) ;
un embrayage à rouleaux (8) relié de façon opérationnelle au levier de frein (12) par un mécanisme à engrenage et permettant un mouvement unidirectionnel du levier de frein (12), et empêchant un mouvement pivotant du levier de frein dans une direction opposée au mouvement unidirectionnel, l'embrayage à rouleaux (8) étant supporté par un support à rouleaux (34) qui est mobile conjointement avec l'embrayage à rouleaux (8) dans une direction opposée au mouvement unidirectionnel ; et
un mécanisme de libération de verrouillage (16) mobile entre une position verrouillée pour empêcher le mouvement du support à rouleaux (34) dans la direction opposée au mouvement unidirectionnel et une position déverrouillée pour permettre le mouvement du support à rouleaux (34) dans la direction du mouvement unidirectionnel.

2. Ensemble frein de stationnement (10) de la revendication 1, dans lequel le mouvement unidirectionnel est dans une première direction, une direction opposée au mouvement unidirectionnel est dans une seconde direction, et l'embrayage à rouleaux (8) permet le mouvement pivotant du levier de frein (12) dans une première direction et empêche le mouvement pivotant du levier de frein (12) dans une seconde direction opposée, le support à rouleaux (34) est mobile conjointement avec l'embrayage à rouleaux (8) dans la seconde direction, et le mécanisme de libération de verrouillage est mobile entre une position verrouillée pour empêcher le mouvement du support à rouleaux (34) dans la seconde direction et une position déverrouillée pour permettre le mouvement du support à rouleaux (34) dans la seconde direction.

3. Ensemble frein de stationnement (10) selon la revendication 1, dans lequel le mécanisme de libération de verrouillage (16) fixe, de façon libérable, le mouvement du support à rouleaux (34) en utilisant une force qui est non normale à une charge de couple appliquée sur l'embrayage à rouleaux (8).

4. Ensemble frein de stationnement (10) selon la revendication 3, dans lequel l'embrayage à rouleaux (8) comprend un manchon généralement cylindrique (18) et au moins un rouleau unidirectionnel disposé entre le manchon (18) et une surface d'appui (49) du support à rouleaux (34) ; de préférence le mécanisme à engrenage comprend un pignon (13) accouplé avec un élément parmi le manchon (18) et le levier de frein (12) ; mieux encore le mécanisme à engrenage comprend un secteur (15) accouplé avec l'autre élément parmi le manchon (18) et le levier de frein (12).

5. Ensemble frein de stationnement (10) selon la revendication 3, dans lequel le mécanisme de libération de verrouillage (16) comprend une ou plusieurs encoches (29) formées dans le support à rouleaux (34) pour recevoir un bloc mobile (36) ; de préférence le mécanisme de libération de verrouillage comprend une bague (51) possédant une surface d'appui (49) pour maintenir le bloc (36) dans l'encoche (29) et un évidement (50) formé dans la surface d'appui (49) pour recevoir au moins une partie du bloc (36) alors qu'il est séparé de l'encoche (29) ; mieux encore la bague (51) est sélectivement mobile entre une position verrouillée, dans laquelle la surface d'appui (49) retient le bloc dans l'encoche du support à rouleaux (34), et une position déverrouillée, dans laquelle l'évidement (50) est généralement aligné avec l'encoche (29) pour permettre le mouvement du bloc entre l'encoche (29) et l'évidement (50).

6. Ensemble frein de stationnement (10) selon la revendication 1, comprenant en outre un élément commandé accouplé de façon pivotante avec le support fixe pour le mouvement sur un second pivot espacé du premier pivot, dans lequel
le levier de frein (12) est accouplé de façon pivotante avec un support fixe pour la rotation sur un premier pivot ;
l'embrayage à rouleaux (8) comporte au moins un rouleau unidirectionnel disposé entre le support à rouleaux (34) et l'élément commandé permettant le mouvement unidirectionnel de l'élément commandé par rapport au support à rouleaux (34),
le mécanisme de libération de verrouillage (16) comporte un bloc (36) sélectivement mobile entre une position verrouillée, entrant de façon opérationnelle en prise avec les supports fixe et à rouleaux, pour empêcher la rotation du support à rouleaux par rapport au support fixe et une position déverrouillée, séparé du support à rouleaux, pour permettre la rotation du support à rouleaux (34) et de l'élément commandé ensemble dans la direction opposée au mouvement unidirectionnel ; et
le mécanisme à engrenage est opérationnel entre l'élément commandé et le levier de frein (12), le mécanisme à engrenage comporte un pignon (13) accouplé avec un élément parmi l'élément commandé et le levier de frein (12) et un secteur (15) accouplé avec l'autre élément parmi l'élément commandé et le levier de frein, le pignon (13) et le secteur (15) étant mécaniquement en prise pour transférer le mouvement entre l'élément commandé et le levier de frein (12).

7. Ensemble frein de stationnement (10) selon la revendication 6, dans lequel le bloc (36) comprend une surface d'appui circonférentielle (39).

8. Ensemble frein de stationnement (10) selon la revendication 7, dans lequel le support à rouleaux (34) comprend une encoche (29) qui reçoit au moins une partie du bloc (36) dans celle-ci et entre en prise avec la surface d'appui circonférentielle (39) pour verrouiller le support à rouleaux (34) par rapport au support fixe.

9. Ensemble frein de stationnement (10) selon la revendication 8 comprenant un régleur (48) accouplé de façon mobile avec le support fixe et actionnant le bloc (36) entre la prise avec et la séparation de l'encoche (29) en réponse au mouvement du régleur (48) par rapport au support fixe.

10. Ensemble frein de stationnement (10) selon la revendication 9, dans lequel le régleur (48) comprend une surface d'appui (49) qui entre en contact avec la surface d'appui circonférentielle (39) et maintient le bloc (36) dans l'encoche (29) du support à rouleaux (34).

11. Ensemble frein de stationnement (10) selon la revendication 10, dans lequel la surface d'appui (49) du régleur (48) entre en contact avec la surface d'appui circonférentielle (39) du bloc (36) avec une force qui est non normale à une charge de couple appliquée sur le manchon de pivotement (18).

12. Ensemble frein de stationnement (10) selon la revendication 10, dans lequel le régleur (48) comprend un évidement (50) formé le long de la surface d'appui (49) du régleur (48), l'évidement (50) recevant au moins une partie du bloc (36) dans celui-ci alors que le bloc est séparé des encoches (29) dans le support à rouleaux (34).

13. Ensemble frein de stationnement (10) selon la revendication 12, dans lequel :
- un élément de guidage (38) fixe par rapport au support fixe est inclus, l'élément de guidage (38) possédant une fente (42) permettant le mouvement du bloc (36) à travers celle-ci entre l'encoche (29) dans le support à rouleaux (34) et l'évidement (50) ;
- l'élément de guidage (38) est disposé entre le support à rouleaux (34) et l'actionneur (40) et la fente (42) dans l'élément de guidage (38) permet le mouvement généralement radial du bloc (36) entre l'encoche (29) et l'évidement (50).

14. Ensemble frein de stationnement (10) selon la revendication 12, dans lequel le régleur (48) est une bague (51) accouplé de façon rotative avec le support fixe pour le mouvement entre une position verrouillée, dans laquelle
l'évidement (50) est espacé du bloc (36) de façon rotative et la surface d'appui (49) est en prise avec la surface d'appui circonférentielle (39) pour retenir le bloc (36) dans l'encoche (29) du support à rouleaux (34), et une position déverrouillée, dans laquelle l'évidement (50) est aligné de façon généralement rotative avec l'encoche (29) pour permettre le mouvement du bloc (36) entre l'encoche (29) et l'évidement (50) ; de préférence l'ensemble frein de stationnement comprend :
- un élément de sollicitation (54) pour solliciter la bague (51) vers la position verrouillée ; ou
- un actionneur motorisé pour actionner le régleur (48) entre les positions verrouillée et déverrouillée.

15. Ensemble frein de stationnement (10) selon la revendication 7, dans lequel le bloc (36) est sélectionné parmi le groupe constitué de : une goupille de forme cylindrique, et une bille.
